# FASCICULE DE BREVET EUROPEEN

(11) **EP 2 725 280 B1**
(45) Date de publication et mention de la délivrance du brevet: **12.08.2015**
(21) Numéro de dépôt: 13184132.2
(22) Date de dépôt: 12.09.2013
(51) Int. Cl.: F16M 13/02, F16M 11/18, F16M 11/10, F16M 13/04

(54) **Dispositif de stabilisation miniaturisé pour appareil embarqué et support mobile appareillé**
Miniaturisiertes Gerät für einen eingebeteten Aparat und eine mobile Stütze
Miniatuarized stabilization tool for a built-in apparatus and a mobile support

(30) Priorité: 29.10.2012 FR 1260291
(43) Date de publication de la demande: 30.04.2014
(73) Titulaire: Girard, Olivier, 26700 La Garde Adhemar (FR)
(72) Inventeur: Girard, Olivier, 26700 La Garde Adhemar (FR)
(74) Mandataire: Prugneau, Philippe

(56) Documents cités:
- WO-A1-2009/051535
- DE-A1-102008 039 468
- FR-A1- 2 740 548
- US-A1- 2007 050 139
- US-A1- 2012 245 711

## Description

### Domaine technique

L'invention concerne de façon générale la stabilisation d'appareil embarqué sur un support mobile tel que par exemple un véhicule.

L'invention concerne plus particulièrement un dispositif de stabilisation miniaturisé pour appareil embarqué comportant une platine destinée à être fixée sur un support mobile, un moteur porté par la platine et pourvue d'une broche d'axe longitudinal apte à être mécaniquement couplée à une première extrémité de l'appareil, et un microprocesseur apte à commander la rotation du moteur. L'invention concerne également un support mobile appareillé comportant au moins un appareil embarqué.

### Technique antérieure

De manière connue, les dispositifs de stabilisation servent à compenser le roulis du support mobile subit par les appareils embarqués. Les appareils embarqués sont par exemple des appareils de capture d'images (appareil photo, ...) ou des appareils d'éclairage (phare, spot lumineux, ...).

Les caméras embarquées sont de plus en plus fréquemment utilisées, notamment par les sportifs qui veulent immortaliser leurs exploits et faire partager leurs sensations. Les caméras embarquées sont fixées par exemple sur le casque d'un pilote ou directement sur un véhicule, l'objectif de la caméra étant orienté vers l'avant ou l'arrière du véhicule pour filmer le déplacement du véhicule. Toutefois, ces images sont parasitées par les pertes d'horizontalité du casque ou du véhicule qui rendent les images difficilement lisibles. Aussi, les images capturées par de telles caméras embarquées sont peu représentatives des sensations ressenties par le pilote du véhicule. Il existe des dispositifs de compensation qui modifient l'image pour rétablir son horizontalité. Ces dispositifs restent néanmoins peu satisfaisants.

Par ailleurs, dans le cas des appareils d'éclairage, il est important, pour assurer au pilote une bonne vision, d'éclairer le devant du véhicule en compensant le roulis du véhicule.

Les dispositifs de stabilisation connus sont encombrants et peu pratiques. Le document WO2009/051535 A1 divulgue un dispositif de stabilisation selon le préambule de la revendication 1.

De plus, le document US2012/0245711 A1 divulgue un autre dispositif de stabilisation.

### Exposé de l'invention

Le but de l'invention est de remédier à ces inconvénients en proposant un dispositif de stabilisation miniaturisé pour appareil embarqué apte à être fixé de manière simple et efficace sur tout type de support en déplacement, notamment un véhicule, pour compenser le roulis du support et ainsi permettre soit de longues prises d'images stabilisées représentatives des sensations du pilote soit un éclairage efficace.

A cet effet, l'invention a pour objet un dispositif de stabilisation miniaturisé pour appareil embarqué comportant une platine destinée à être fixée sur un support mobile, un moteur porté par la platine et pourvue d'une broche d'axe longitudinal apte à être mécaniquement couplée à une première extrémité de l'appareil, et un microprocesseur apte à commander la rotation du dit moteur, ledit moteur est à position angulaire réglable, caractérisé en ce que le dispositif de stabilisation comprend un gyroscope trois axes et un accéléromètre trois axes aptes à transmettre au microprocesseur des indications respectivement de roulis et d'accélération, en ce que le microprocesseur est agencé pour commander la position angulaire du moteur en fonction des indications de position angulaire et d'accélération pour compenser le roulis au niveau de l'axe longitudinal. Le moteur à position angulaire réglable est par exemple un servomoteur ou un moteur pas à pas.

L'idée à la base de l'invention est de motoriser l'appareil par le biais d'un moteur à position angulaire réglable couplé à un gyroscope et à un accéléromètre pour compenser l'inclinaison du support.

Le dispositif de stabilisation miniaturisé selon l'invention peut avantageusement présenter les particularités suivantes :
- il comporte au moins deux galets d'appui rotatifs longitudinalement distants de la broche et dont les axes d'appui sont distincts de l'axe longitudinal, les galets d'appui étant agencés pour recevoir l'appui de la seconde extrémité de l'appareil et accompagner sa rotation. Cet agencement particulier permet d'obtenir un dispositif de stabilisation compact et efficace ;
- il comporte un galet de tension prévu au-delà des galets d'appui par rapport à la broche et dont l'axe de tension est séparé de l'axe longitudinal par le plan passant par les axes d'appui, et un lien élastique adapté pour s'enrouler tendu sur une partie de l'appareil et sur une partie du galet de tension pour maintenir l'appareil plaqué contre les galets d'appui. L'appareil embarqué est ainsi fixé de manière fiable au support mobile dont il peut suivre tous les mouvements ;
- il est pourvu d'une carte électronique comportant au moins le microprocesseur, ledit gyroscope et l'accéléromètre, la carte électronique étant suspendue élastiquement à la platine par des moyens de fixation élastique agencés pour absorber au moins une partie des vibrations haute fréquence subit par la platine lors du déplacement du support sur lequel elle est fixée. Ainsi, le fonctionnement de la carte électronique n'est pas affectée par les vibrations du support mobile en déplacement ;
- la platine comporte des doigts de fixation distants entre eux, les moyens de fixation élastique comportent au moins deux éléments élastiques destinés à relier chacun des doigts de fixation à un coté de la carte électronique placée entre eux de sorte qu'elle soit sans contact direct avec la platine. Ainsi, la carte électronique ne risque pas d'être choquée contre le support lors des déplacements du support ;
- le dispositif de stabilisation miniaturisé comporte un tube creux destiné à loger l'appareil et dont la longueur et le diamètre sont prévus pour que l'axe du tube soit coaxial à l'axe longitudinal lorsque le tube est mécaniquement couplé à la broche et porté par les galets d'appui. Ainsi, la position angulaire de l'appareil correspond directement à la position angulaire de la broche ;
- le dispositif de stabilisation miniaturisé comporte une antenne GPS connectée au microprocesseur et agencée pour transmettre une indication de position géographique du dispositif de stabilisation ;
- le dispositif de stabilisation miniaturisé comporte plusieurs caméras raccordées au microprocesseur. Ainsi, le dispositif miniaturisé permet par exemple la prise d'images selon plusieurs points de vue ou un éclairage de type panoramique.

L'invention a également pour objet un support appareillé comprenant au moins un appareil embarqué fixé sur le support au moyen d'un dispositif de stabilisation tel que décrit précédemment.

La broche et la caméra de ce support appareillé sont chacune pourvue d'une zone de matériau auto agrippant agencé pour assurer la fixation de la caméra sur la broche.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- les figures 1 à 3 sont des vues respectivement en perspective, de coté et de face du dispositif de stabilisation miniaturisé selon l'invention, équipé d'une caméra ;
- la figure 4 est une vue schématique des composants électronique du dispositif de stabilisation miniaturisé selon l'invention.

### Description d'un mode de réalisation

Le dispositif de stabilisation miniaturisé selon l'invention peut être utilisé pour compenser le roulis de tout type d'appareil monté sur un support mobile. De manière non limitative, la description porte sur un dispositif de stabilisation portant une caméra et destinée à être fixée sur tout type de support mobile.

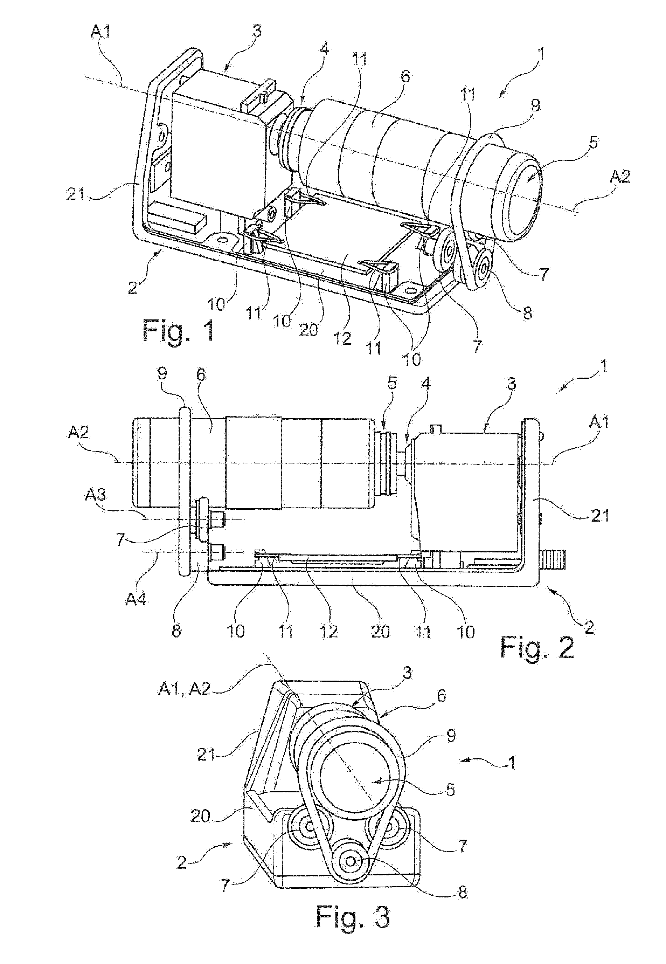

En référence aux figures 1 à 3, le dispositif de stabilisation 1 miniaturisé selon l'invention comporte une platine 2 par exemple réalisée en matériau plastique ou en tout autre matériau adapté. La platine 2 forme un L dont la grande branche 20 sensiblement plane est destinée à être fixée à un support (non représenté). A cet effet, la platine 2 peut être pourvue de tout moyen de fixation (non représentés) adaptés tels que par exemple un matériau auto agrippant ou un collier de serrage. La platine 2 peut ainsi être fixée sur tout type de support mobile, tel que notamment un véhicule, par exemple une moto, un vélo, un bobsleigh, un surf des neiges, un skateboard, un avion, un bateau, une planche à voile ou tout autre véhicule ainsi que sur un être humain, un animal, ... Selon la prise de vue souhaitée, la platine 2 peut être fixée à l'avant, à l'arrière ou sur un coté du véhicule.

Le dispositif de stabilisation 1 comporte un moteur 3 disposé dans l'angle formé par la platine 2 entre la grande branche 20 et la petite branche 21. Le moteur 3 est solidarisé à la platine 2 par exemple par des vis (non représentées). Le moteur 3 comporte une broche 4 (visible sur la figure 2) d'axe longitudinal A1 sensiblement parallèle à la grande branche 20 de la platine 2 et orientée à l'opposé de la petite branche 21. Cette broche 4 est recouverte d'un matériau auto agrippant, par exemple un ruban adhésif avec velcro^{™}, pour solidariser la caméra 5 (décrite plus loin) à la platine 2. Le moteur 3 est à position angulaire réglable, par exemple de type servomoteur ou de type pas à pas, apte à être calé selon une position angulaire précise. Ainsi, le moteur 3 peut orienter angulairement la caméra 5 de manière précise autour de l'axe longitudinal A1.

La caméra 5 est de type caméra paluche, et peut, de manière optionnelle, être logée et fixée dans un tube 6 creux. L'extrémité axiale du tube 6 ou de la caméra 5, opposée à l'objectif de la caméra 5, est recouverte d'un matériau auto agrippant compatible avec celui de la broche 4. Ainsi, la caméra 5 peut être solidarisée à la broche 4. Lorsque le dispositif de stabilisation ne comporte pas de tube, la caméra est fixée directement à la broche, par exemple au moyen d'un matériau auto agrippant similaire.

L'extrémité libre de la grande branche 20 de la platine 2 porte deux galets d'appui 7 et un galet de tension 8 rotatifs et montés fous. Les axes d'appui A3 des galets d'appui 7 (visibles sur la figure 2) et l'axe de tension A4 du galet de tension 8 (également visible sur la figure 2) sont parallèles entre eux. Les axes d'appui A3 sont de plus compris dans un plan parallèle à l'axe longitudinal A1 duquel ils sont distincts. L'axe de tension A4 est par ailleurs prévu entre les axes d'appui A3, dans un plan situé au-delà de celui contenant les axes d'appui A3 par rapport à l'axe longitudinal A1. Les galets d'appui 7 se présentent chacun sous la forme d'un disque contenu dans un plan perpendiculaire à l'axe longitudinal A1. Chaque galet d'appui 7 est destiné à recevoir, sur sa périphérie, l'appui de la caméra 5 ou du tube 6. Le diamètre des galets d'appui 7 et du tube 6 sont prévus de sorte que, une fois le tube 6 fixé à la broche 4 et en appui sur les galets d'appui 7, l'axe du tube 6 (et donc l'axe de visée A2 de la caméra 5) soit coaxial à l'axe longitudinal A1. Ainsi, la rotation de la broche 4 autour de l'axe longitudinal A1 entraîne la rotation de la caméra 5 autour de son axe de visée A2. Les galets d'appui 7 guident la caméra 5 lors de sa rotation. Le galet de tension 8 est combiné à un lien élastique 9, s'enroulant sur une partie de la périphérie du galet de tension 8 et du tube 6, ou directement de la caméra 5. Le lien élastique 9 est par exemple un joint torique. Le galet de tension 8 comporte une gorge annulaire guidant le lien élastique 9 qui plaque la caméra 5 contre les galets d'appui 7. Le galet de tension 8 et le lien élastique 9 sont contenus dans un plan perpendiculaire à l'axe longitudinal A1 et décalé au-delà de celui contenant les galets d'appui 7 par rapport à la broche 4. Le galet de tension 8, le lien élastique 9 et les galets d'appui 7 garantissent que, quelle que soit l'orientation du dispositif de stabilisation 1 et pendant l'utilisation de la caméra 5, l'axe de visée A2 de la caméra 5 reste coaxial avec l'axe longitudinal A1 de la broche 4.

La grande branche 20 de la platine 2 comporte quatre doigts de fixation 10 prévus entre le moteur 3 et les galets d'appui 7, dont une paire est disposée vers le moteur 3 et dont l'autre paire est disposée vers les galets d'appui 7. Chaque doigt de fixation 10 reçoit un élément élastique 11, par exemple un caoutchouc élastique le reliant à un coté d'une carte électronique 12 plane décrite plus loin. La carte électronique 12 comporte à cet effet quatre orifices pour le passage des éléments élastiques 11 et est ainsi fixée élastiquement, parallèlement à branche horizontale 20 de la platine 2 et à l'axe longitudinal A1, sans contact direct avec la platine 2. Les doigts de fixation 10 de chaque paire sont alignés perpendiculairement à l'axe longitudinal A1. De plus, les doigts de fixation 10 sont répartis symétriquement de part et d'autre de l'axe longitudinal A1. Ainsi, les efforts de tension qu'ils exercent sur la carte électronique 12 sont sensiblement parallèles à l'axe longitudinal A1.

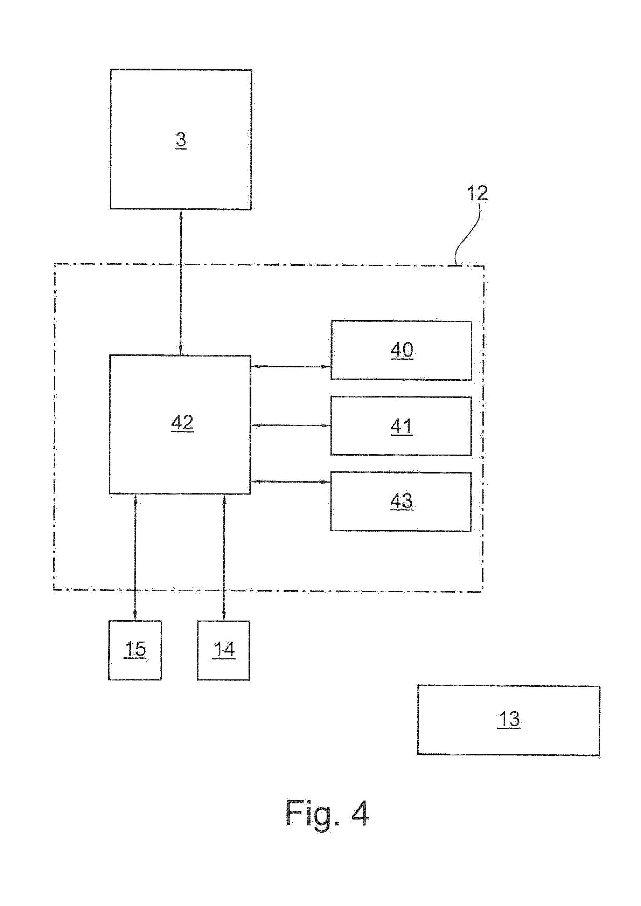

En référence à la figure 4, la carte électronique 12 (schématisée représentée en trait mixte fin) comporte un gyroscope 40 trois axes et un accéléromètre 41 trois axes aptes à donner respectivement des indications de position angulaire et d'accélération. La carte électronique 12 comporte également un microprocesseur 42 connecté au moteur 3 pour commander le fonctionnement du moteur 3 et orienter la caméra 5 de sorte à compenser le roulis subit par la platine 2. Ainsi, l'horizontalité apparente sur les images est conservée en permanence, facilitant d'autant la lecture des images capturées par la caméra 5. La carte électronique 12 peut comporter également, de manière optionnelle, un magnétomètre 43 trois axes permettant la mesure du champ magnétique dans lequel la caméra se trouve. Le calcul de l'orientation dans l'espace est basé sur un filtre de Kalman non linéaire (filtre de Kalman étendu) à six états (les trois angles d'Euler, biais du gyroscope 40 trois axes). Le gyroscope 40 trois axes propage les états du filtre alors que l'accéléromètre 41 trois axes ainsi que le magnétomètre 43 trois axes sont utilisés comme observation sur le filtre. Les trois angles d'Euler sont donc calculés (roulis, tangage, lacet) mais un seul le roulis est utilisé pour le contrôle de l'ensemble électromécanique.

La carte électronique 12 est avantageusement couplée à un bouton de réglage 14 qui permet la mise à zéro, dans une position théorique horizontale. Le réglage du dispositif de stabilisation 1 tiendra compte de cette position théorique pour compenser les variations d'orientation.

De manière optionnelle et non représentée, la carte électronique peut comporter une antenne GPS pour transmettre la position géographique, un tachymètre, un baromètre permettant d'améliorer la précision du calcul des angles d'Euler ou tout autre appareil adapté. La carte électronique peut également comporter de manière optionnelle une borne de sortie permettant de la coupler à une interface externe (non représentée). On peut ainsi par exemple connecter le microprocesseur à un ordinateur externe utilisé pour réaliser toute configuration, mettre à jour des paramètres du dispositif de stabilisation et/ou effectuer tout téléchargement de données et/ou toute autre opération liée à des données téléchargées.

Enfin certaines fonctions additionnelles peuvent être intégrées au fonctionnement de la carte électronique, par exemple la commande du zoom, de la mise au point, du début/arrêt de l'enregistrement ou toute autre fonction.

Le dispositif de stabilisation 1 est par exemple alimenté par une batterie 6 volt. Il peut en outre comporter des voyants lumineux 15 connectés à la carte électronique 12, par exemple des LEDs signalant par leur allumage la mise en route du dispositif de stabilisation 1, l'alimentation du moteur 3, la connexion GPS ou tout autre état de fonctionnement.

Pendant la prise d'images, le dispositif de stabilisation 1 subit les vibrations liées au déplacement du support. Au moins une partie de ces vibrations est amorties par les éléments élastiques 11 permettant notamment d'éviter que les vibrations hautes fréquences ne saturent la carte électronique 12. Ainsi, la caméra 5 peut filmer tout en conservant l'horizontalité malgré les conditions extrêmes liées à la vitesse, à l'inclinaison et aux vibrations basses et hautes fréquences.

Selon une variante de réalisation non représentée, le dispositif de stabilisation est apte à porter plusieurs caméras. Selon cette variante, la carte électronique du système peut gérer simultanément plusieurs caméras pouvant être orientées dans des directions différentes. On peut ainsi par exemple utiliser une double caméra avec prises avant et arrière simultanées. Les caméras peuvent également être orientées pour que leurs axes de prise de vues ne soient pas coaxiaux.

Le dispositif de stabilisation 1 selon l'invention permet d'atteindre les objectifs précédemment mentionnés. Pourvu d'une caméra 5, il permet d'offrir de longues prises d'images, stabilisées à la source, c'est-à-dire au niveau de la caméra 5 sans avoir à modifier l'image. Pourvu d'un appareil d'éclairage, il permet d'éclairer de manière efficace par exemple devant un véhicule en s'assurant que le halo lumineux reste efficace malgré le roulis. Le dispositif de stabilisation 1 pourvu d'une caméra 5 s'adresse par exemple à des sportifs amateurs ou professionnels tels que par exemple des motards ou personnes pratiquant un sport extrême, à des équipes de tournage en charge de la retransmission TV de compétition sportives, à des réalisateurs cinéma ou à tout autre personne intéressée. La conception du dispositif de stabilisation 1 permet sa miniaturisation qui facilite son utilisation, notamment lorsqu'il est porté sur un casque.

Le dispositif de stabilisation 1 selon l'invention peut bien entendu être utilisé avec tout type d'appareil embarqué tel qu'un appareil photo, un appareil d'éclairage ou similaire. Ainsi, par exemple, les galets d'appui 7 et le galet de tension 8 peuvent être interchangeables avec d'autres galets de diamètres différents pour s'adapter à différents diamètres de caméra 5. Le support appareillé comportant un tel dispositif de stabilisation 1 peut être utilisé normalement. Ce support est par exemple un véhicule, un casque, un mât ou tout autre support adapté.

Il va de soi que la présente invention ne saurait être limitée à la description qui précède d'un de ses modes de réalisation, susceptibles de subir quelques modifications sans pour autant sortir du cadre de l'invention qui est définie par la revendication 1.

On pourra par exemple en variante incorporer une batterie d'alimentation, prévoir un boîtier étanche additionnel notamment pour l'utilisation en milieu nautique du dispositif de stabilisation.

## Revendications

1. Dispositif de stabilisation (1) miniaturisé pour appareil (5) embarqué comportant une platine (2) destinée à être fixée sur un support mobile, un moteur (3) porté par ladite platine (2) et pourvue d'une broche (4) d'axe longitudinal (A1) apte à être mécaniquement couplée à une première extrémité dudit appareil (5), et un microprocesseur (42) apte à commander la rotation dudit moteur (3), ledit moteur (3) est à position angulaire réglable, **caractérisé en ce que** le dispositif de stabilisation (1) comprend un gyroscope (40) trois axes et un accéléromètre (41) trois axes aptes à transmettre audit microprocesseur (42) des indications respectivement de roulis et d'accélération, **en ce que** ledit microprocesseur (42) est agencé pour commander la position angulaire dudit moteur (3) en fonction desdites indications de position angulaire et d'accélération pour compenser ledit roulis au niveau dudit axe longitudinal (A1).

2. Dispositif de stabilisation (1) miniaturisé selon la revendication 1, **caractérisé en ce qu'**il comporte au moins deux galets d'appui (7) rotatifs longitudinalement distants de ladite broche (4) et dont les axes d'appui (A3) sont distincts dudit axe longitudinal (A1), lesdits galets d'appui (7) étant agencés pour recevoir l'appui de la seconde extrémité dudit appareil (5) et accompagner sa rotation.

3. Dispositif de stabilisation (1) miniaturisé selon la revendication précédente, **caractérisé en ce qu'**il comporte un galet de tension (8) prévu au-delà desdits galets d'appui (7) par rapport à ladite broche (4) et dont l'axe de tension (A4) est séparé dudit axe longitudinal (A1) par le plan passant par lesdits axes d'appui (A3), et un lien élastique (9) adapté pour s'enrouler tendu sur une partie dudit appareil (5) et sur une partie dudit galet de tension (8) pour maintenir ledit appareil (5) plaqué contre lesdits galets d'appui (7).

4. Dispositif de stabilisation (1) miniaturisé selon au moins l'une des revendications précédentes, **caractérisé en ce qu'**il est pourvu d'une carte électronique (12) comportant au moins ledit microprocesseur (42), ledit gyroscope (40) et ledit accéléromètre (41), ladite carte électronique (12) étant suspendue élastiquement à ladite platine (2) par des moyens de fixation élastique (11) agencés pour absorber au moins une partie des vibrations haute fréquence subit par ladite platine (2) lors du déplacement dudit support sur lequel elle est fixée.

5. Dispositif de stabilisation (1) miniaturisé selon la revendication précédente, **caractérisé en ce que** ladite platine (2) comporte des doigts de fixation (10) distants entre eux, et lesdits moyens de fixation élastique comportent au moins deux éléments élastiques (11) destinés à relier chacun desdits doigts de fixation (10) à un coté de ladite carte électronique (12) placée entre eux de sorte qu'elle soit sans contact direct avec ladite platine (2).

6. Dispositif de stabilisation (1) miniaturisé selon la revendication 2, **caractérisé en ce qu'**il comporte un tube (6) creux destiné à loger ledit appareil (5) et dont la longueur et le diamètre sont prévus pour que l'axe dudit tube (6) soit coaxial audit axe longitudinal (A1) lorsque ledit tube (6) est mécaniquement couplé à ladite broche et porté par lesdits galets d'appui (7).

7. Dispositif de stabilisation miniaturisé selon au moins l'une des revendications précédentes, **caractérisé en ce qu'**il comporte une antenne GPS connectée audit microprocesseur et agencée pour transmettre une indication de position géographique dudit dispositif de stabilisation.

8. Dispositif de stabilisation miniaturisé selon au moins l'une des revendications précédentes, **caractérisé en ce qu'**il comporte plusieurs caméras raccordées audit microprocesseur.

9. Support appareillé comprenant au moins un appareil (5) embarqué, **caractérisé en ce que** ledit appareil (5) embarqué est fixé sur ledit support au moyen d'un dispositif de stabilisation (1) selon au moins l'une quelconque des revendications 1 à 8.

10. Support appareillé selon la revendication précédente, **caractérisé en ce que** ladite broche (4) et ledit appareil (5) sont pourvus chacun d'une zone de matériau auto agrippant agencé pour assurer la fixation dudit appareil (5) sur ladite broche (4).

## Patentansprüche

1. Miniaturisierte Stabilisierungseinrichtung (1) eingespanntes Gerät (5), welche eine Grundplatte (2), die dazu bestimmt ist, an einem beweglichen Träger befestigt zu werden, einen Motor (3), der von der Grundplatte (2) getragen wird und mit einer Spindel (4) mit einer Längsachse (A1) versehen ist, die geeignet ist, mit einem ersten Ende des Gerätes (5) mechanisch gekoppelt zu werden, und einen Mikroprozessor (42), der geeignet ist, die Drehung des Motors (3) zu steuern, aufweist, wobei der Motor (3) ein Motor mit verstellbarer Winkelposition ist, **dadurch gekennzeichnet, dass** die Stabilisierungseinrichtung (1) ein Drei-Achsen-Gyroskop (40) und einen Drei-Achsen-Beschleunigungsmesser (41) umfasst, die geeignet sind, zu dem Mikroprozessor (42) jeweils Rollbewegungsangaben oder Beschleunigungsangaben zu übertragen, und dadurch, dass der Mikroprozessor (42) dafür ausgelegt ist, die Winkelposition des Motors (3) in Abhängigkeit von diesen Winkelpositions- und Beschleunigungsangaben zu steuern, um das Rollten in Bezug auf die Längsachse (A1) zu kompensieren.

2. Miniaturisierte Stabilisierungseinrichtung (1) nach Anspruch 1, **dadurch gekennzeichnet, dass** sie wenigstens zwei drehbare Stützrollen (7) aufweist, die in Längsrichtung von der Spindel (4) entfernt sind und deren Stützachsen (A3) von der Längsachse (A1) verschieden sind, wobei die Stützrollen (7) dafür ausgelegt sind, als Auflage für das zweite Ende des Gerätes (5) zu dienen und seine Drehung zu begleiten.

3. Miniaturisierte Stabilisierungseinrichtung (1) nach dem vorhergehenden Anspruch, **dadurch gekennzeichnet, dass** sie eine Spannrolle (8), die in Bezug auf die Spindel (4) jenseits der Stützrollen (7) vorgesehen ist und deren Spannachse (A4) von der Längsachse (A1) durch die Ebene getrennt ist, die durch die Stützachsen (A3) verläuft, und ein elastisches Bindeglied (9), das dafür eingerichtet ist, im gespannten Zustand um einen Teil des Gerätes (5) und um einen Teil der Spannrolle (8) gewickelt zu werden, um das Gerät (5) an die Stützrollen (7) angedrückt zu halten, aufweist.

4. Miniaturisierte Stabilisierungseinrichtung (1) nach wenigstens einem der vorhergehenden Ansprüche, **dadurch gekennzeichnet, dass** sie mit einer elektronischen Karte (12) versehen ist, die wenigstens den Mikroprozessor (42), das Gyroskop (40) und den Beschleunigungsmesser (41) aufweist, wobei die elektronische Karte (12) an der Grundplatte (2) durch Mittel zur elastischen Befestigung (11) elastisch aufgehängt ist, die dafür ausgelegt sind, wenigstens einen Teil der hochfrequenten Schwingungen zu absorbieren, denen die Grundplatte (2) während der Bewegung des Trägers, auf dem sie befestigt ist, ausgesetzt ist.

5. Miniaturisierte Stabilisierungseinrichtung (1) nach dem vorhergehenden Anspruch, **dadurch gekennzeichnet, dass** die Grundplatte (2) voneinander entfernte Befestigungsfinger (10) aufweist und die Mittel zur elastischen Befestigung wenigstens zwei elastische Elemente (11) aufweisen, die dazu bestimmt sind, jeden der Befestigungsfinger (10) mit einer Seite der elektronischen Karte (12) zu verbinden, die derart zwischen ihnen angeordnet ist, dass sie keinen direkten Kontakt mit der Grundplatte (2) hat.

6. Miniaturisierte Stabilisierungseinrichtung (1) nach
Anspruch 2, **dadurch gekennzeichnet, dass** sie ein hohles Rohr (6) aufweist, das dazu bestimmt ist, das Gerät (5) aufzunehmen, und dessen Länge und Durchmesser so bemessen sind, dass die Achse des Rohres (6) mit der Längsachse (A1) koaxial ist, wenn das Rohr (6) mit der Spindel mechanisch gekoppelt ist und von den Stützrollen (7) getragen wird.

7. Miniaturisierte Stabilisierungseinrichtung nach wenigstens einem der vorhergehenden Ansprüche, **dadurch gekennzeichnet, dass** sie eine GPS-Antenne aufweist, die mit dem Mikroprozessor verbunden ist und dafür ausgelegt ist, eine geografische Positionsangabe der Stabilisierungseinrichtung zu senden.

8. Miniaturisierte Stabilisierungseinrichtung nach wenigstens einem der vorhergehenden Ansprüche, **dadurch gekennzeichnet, dass** sie mehrere Kameras aufweist, die an den Mikroprozessor angeschlossen sind.

9. Bestückter Träger, der wenigstens ein Fahrzeuggerät (5) aufweist, **dadurch gekennzeichnet, dass** das eingespannte Gerät (5) an dem Träger mittels einer Stabilisierungseinrichtung (1) nach wenigstens einem der Ansprüche 1 bis 8 befestigt ist.

10. Bestückter Träger nach dem vorhergehenden Anspruch, **dadurch gekennzeichnet, dass** die Spindel (4) und das Gerät (5) jeweils mit einem Bereich aus selbsthaftendem Material versehen sind, der dafür ausgelegt ist, die Befestigung des Gerätes (5) auf der Spindel (4) sicherzustellen.

## Claims

1. A miniaturized stabilization device (1) for a built-in apparatus (5) comprising a platen (2) dedicated to be fixed on a mobile support, a motor (3) carried by said platen (2) and provided with a spindle (4) of longitudinal axis (A1) adapted to be mechanically coupled to a first end of said apparatus (5), and a microprocessor (42) adapted to control the rotation of said motor (3), said motor (3) is adjustable in angular position, **characterized in that** the stabilization device (1) comprises a three-axis gyroscope (40) and a three axes accelerometer (41) adapted to transmit to said microprocessor (42) respectively roll and acceleration indications, **in that** said microprocessor (42) is arranged to control the angular position of said motor (3) based on said indications of angular position and acceleration to compensate said roll at said longitudinal axis (A1).

2. A miniaturized stabilization device (1) according to claim 1, **characterized in that** it comprises at least two longitudinally rotary support rollers (7) spaced from said spindle (4), whose bearing axes (A3) are separated from said longitudinal axis (A1), said support rollers (7) being arranged to receive the support of the second end of said apparatus (5) and support its rotation.

3. A miniaturized stabilization device (1) according to the preceding claim, **characterized in that** it comprises a tension roller (8) provided above said support rollers (7) relative to said spindle (4), whose tension axis (A4) is separated from said longitudinal axis (A1) by the plane passing through said bearing axes (A3), and a resilient link (9) adapted to wrap stretched over a portion of said apparatus (5) and on a portion of said tension roller (8) to maintain said device (5) pressed against said support rollers (7).

4. A miniaturized stabilization device (1) according to at least one of the preceding claims, **characterized in that** it is provided with an electronic card (12) comprising at least said microprocessor (42), said gyroscope (40) and said accelerometer (41), said electronic card (12) being resiliently suspended to said platen (2) by resilient fixing means (11) arranged to absorb at least a portion of the high frequency vibrations undergone by said platen (2) with the movement of said support on which it is fixed.

5. A miniaturized stabilization device (1) according to the preceding claim, **characterized in that** said platen (2) comprises fixing fingers (10) spaced between them, and said resilient fixing means comprise at least two resilient elements (11) dedicated to connect each of said fixing fingers (10) to one side of said electronic card (12) placed between them so that said electronic card (12) is not in direct contact with said platen (2).

6. A miniaturized stabilization device (1) according to claim 2, **characterized in that** it comprises a hollow tube (6) intended to accommodate said apparatus (5) and whose length and diameter are designed so that the axis of said tube (6) is coaxial with said longitudinal axis (A1) when said tube (6) is mechanically coupled to said spindle and carried by said support rollers (7).

7. A miniaturized stabilization device (1) according to at least one of the preceding claims, **characterized in that** it comprises a GPS antenna connected to said microprocessor and arranged to transmit an indication of geographical position of said stabilization device.

8. A miniaturized stabilization device according to at least one of the preceding claims, **characterized in that** it comprises a plurality of cameras connected to said microprocessor.

9. A support comprising at least one built-in apparatus (5), **characterized in that** said built-in apparatus (5) is fixed on said support by means of a stabilization device (1) according to at least one of claims 1 to 8.

10. A support according the preceding claim, **characterized in that** said spindle (4) and said apparatus (5) are each provided with a self-gripping material portion arranged to secure the fixation of said apparatus (5) on said spindle (4).
